# EUROPEAN PATENT SPECIFICATION

(11) **EP 1 626 640 B1**
(45) Date of publication and mention of the grant of the patent: **03.08.2011**
(21) Application number: 04759160.7
(22) Date of filing: 07.04.2004
(51) Int. Cl.: A46B 13/02, A46B 9/04

(54) **ELECTRIC TOOTHBRUSH**
ELEKTRISCHE ZAHNBÜRSTE
BROSSE A DENTS ELECTRIQUE

(30) Priority: 09.04.2003 US 410038
(43) Date of publication of application: 22.02.2006
(73) Proprietor: THE PROCTER & GAMBLE COMPANY, Cincinnati, OH 45202 (US)
(72) Inventor: CHAN, John, Geoffrey, Maineville, OH 45039 (US); PING, Wang Room 608, 7th Building, Beijing 100029 (CN)
(74) Representative: Zetterer, Gerd
(86) International application number: PCT/US2004/010573
(87) International publication number: WO 2004/091340

(56) References cited:
- DE-U- 29 913 889
- GB-A- 2 371 217
- US-A- 5 836 030
- US-A1- 2002 124 337
- US-A1- 2003 033 680
- US-B2- 6 308 358

## Description

### Field of the Invention

The present invention relates to the field of electrically powered toothbrushes.

### Background of the invention

Most known electric toothbrushes utilize a single bristle carrier that is powered or otherwise driven by an electric motor incorporated in the toothbrush. The bristle carriers in these toothbrushes generally undergo rotary motion. There is a desire to promote the retention of toothpaste or dentifrice composition on a movable bristle carrier of an electric toothbrush, and particularly, along the interface between the ends of the bristles or cleaning elements and the surface of the teeth. In an electric toothbrush, powered motion of a bristle carrier may eject the dentifrice material from the bristle carrier, thereby possibly diminishing the effectiveness and/or concentration of agents within the dentifrice material. These agents can include anticaries agents, fluoride agents, anticalculus agents, antimicrobial agents, desensitizing agents, anesthetic agents, anti-inflammatory agents, abrasives, and whitening agents. As such, there is a desire to provide improved designs for retaining a dentifrice material while still providing affective cleaning of the teeth. Still further, there is a desire to provide these benefits in combination with a plurality of movable bristle carriers.

Document DE 299 13 889 U1 describes an electric toothbrush with a rotatable bristle carrier carrying tufts of bristles of different lengths, wherein the longer tufts are arranged along the periphery of the substantially circular bristle carrier, whereas the shorter tufts are placed in the central region of the bristle carrier. Moreover, document US 2002/0124337 shows a manual toothbrush having a U-shaped field of bristles and an elastomeric polishing element having an elongate, curved shape and extending between the two legs of the U-shapéd bristle field.

### Summary of the Invention

According to the present invention, an electric toothbrush according to claim 1 or claim 14 is provided. Preferred embodiments of the invention are laid down in the dependent claims.

The electric toothbrush has an elongate body having a handle, a head, and a neck extending between the handle and the head. The body has an interior chamber with a motor. A shaft is operatively connected to the motor. A first movable bristle carrier is disposed on the head. The shaft is operatively connected to the first bristle carrier to impart motion thereto. The first bristle carrier has a first composite tuft formed from a plurality of closely spaced bristle tufts and a plurality of second bristle tufts. The second tufts have a height that is greater than a height of the first composite tuft. The bristles of the first composite tuft having free ends and the bristles of the second tufts having free ends. The total surface area of the bristles of the first composite tuft is greater than the total surface area of the bristles of the second tufts, and the plurality of second tufts are disposed adjacent a portion of a perimeter of the composite tuft to form a first recessed region.

### Brief Description of the Drawings

The present invention may take form in various components and arrangements of components, and in various techniques, methods, or procedures and arrangements of steps. The referenced drawings are only for purposes of illustrating preferred embodiments, they are not necessarily to scale, and are not to be construed as limiting the present invention.

It is believed that the present invention will be better understood from the following description taken in conjunction with the accompanying drawings in which:
Fig. 1 is perspective view of a toothbrush in accordance with the invention.
Fig. 2 is a partial perspective view of the toothbrush of Fig. 1, wherein a portion has been removed to expose interior details.
Fig. 3 is partial perspective view of the toothbrush head of Fig. 1.
Fig. 4 is a top planar view of the toothbrush head of Fig. 3.
Fig. 5 is a cross-sectional elevation view of the toothbrush head of Fig. 4, taken along line 5-5 thereof.
Figs. 6A to 6D are perspective views of integral tufts in accordance with the present invention.
Figs. 7A to 7D are top plan views of arrangements of the integral tufts of Figs. 6A to 6D on a toothbrush head having two movable bristle carriers.
Fig. 8 is a partial perspective view of another toothbrush head in accordance with the present invention.
Fig. 9 is a partial perspective view of yet another toothbrush head in accordance with the present invention.
Fig. 10 is a partial perspective view of still another toothbrush in accordance with the present invention.

### Detailed Description of the Preferred Embodiments

The present invention relates to electric toothbrushes and electric toothbrush heads having one or more movable bristle carriers, preferably two, having one or more recessed regions generally defined by bristle tufts or cleaning elements retained on the bristle carrier. The recessed regions are adapted for retaining toothpaste or dentifrice material. The floor of the recessed region preferably has an irregular surface that is also continuous to assist with retaining the dentifrice material. The floor of the recessed region may be formed from composite tufts or integral tufts. These aspects are described in greater detail below.

The present invention can assist in retaining a dentifrice material in contact with the teeth and/or gums during use of an electric toothbrush. The dentifrice material can include agents that act upon the teeth and/or gums, such as anticalculus agents, fluoride agents, antimicrobial agents, dentinal desensitizing agents, anesthetic agents, antifungal agents, anti-inflammatory agents, selective H-2 antagonists, anticaries agents, nutrients, and mixtures thereof.

The fluoride agents can include sodium fluoride; stannous fluoride; indium fluoride; organic fluorides such as amine fluorides, and sodium monofluorophosphate.

The anticalculus agents can include polyphosphates and salts thereof; polyamino propane sulfonic acid (AMPS) and salts thereof; polyolefin sulfonates and salts thereof; polyvinyl phosphates and salts thereof; polyolefin phosphates and salts thereof; diphosphonates and salts thereof; phosphonoalkane carboxylic acid and salts thereof; polyphosphonates and salts thereof; polyvinyl phosphonates and salts thereof; polyolefin phosphonates and salts thereof; polypeptides; pyrophosphates; and mixtures thereof.

The whitening agents can include peroxides; perborates; percarbonates; peroxyacids; persulfates; metal chlorites; and combinations thereof.

The abrasive agents can include silicas including gels and precipitates, insoluble sodium polymetaphosphate, hydrated alumina, calcium carbonate, dicalcium orthophosphate dihydrate, calcium pyrophosphate, tricalcium phosphate, calcium polymetaphosphate, and resinous abrasive materials such as particulate condensation products of urea and formaldehyde. Other abrasives can include thermo-setting polymerized resins such as melamines, phenolics, ureas, melamine-ureas, melamine-formaldehydes, urea-formaldehyde, melamine-urea-formaldehydes, cross-linked epoxides, and cross-linked polyesters.

Before describing the various preferred embodiments, it is instructive to define various types of motions. As used herein, the term "angular motion" refers to any angular displacement. "Linear motion" is movement along a straight or substantially straight, line or direction. "Curvilinear motion" is movement that is neither completely linear nor completely angular but is a combination of the two (e.g., curvilinear). These motions can be constant or periodic. Constant motion refers to motion that does not change direction or path (i.e., is unidirectional). Periodic motion refers to motion that reverses direction or path. Constant angular motion is referred to as rotary motion, although features herein may be described as "rotatably mounted" which is intended to merely mean that angular motion, whether periodic or constant, is possible. Periodic angular motion is referred to as "oscillation". Curvilinear motions can also be either constant (i.e., unidirectional) or periodic (i.e., reverses direction). Periodic linear motion is referred to as "reciprocation". "Orbital motion" is a type of angular motion about an axis that is distinct from and is some distance apart from the center of the moving component, e.g. a shaft. Orbital motion may be either constant angular motion or periodic angular motion.

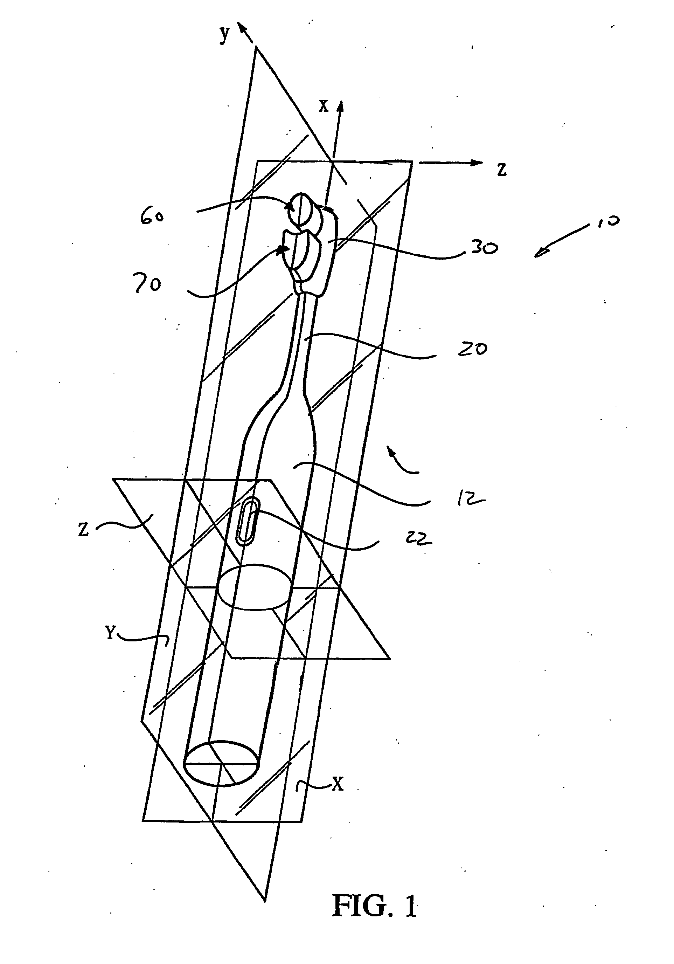

Referring to Fig. 1, the above-described motions can also occur along one or more axes. Accordingly, motion is described herein as being either one, two, or three dimensional motion depending upon the number of axial coordinates required to describe the position of a bristle carrier during its movement. One dimensional motion is motion that can be described by a single coordinate. Typically, only linear motion can be one dimensional. Two dimensional motion is movement by a bristle carrier that requires two coordinates to describe the path of travel of the bristle carrier. Angular motion that occurs in a single plane is two dimensional motion. Three dimensional motion is movement by a bristle carrier that requires three coordinates to describe the path of travel of the bristle carrier. An example of three dimensional motion is movement by a bristle carrier in the path of a helix.

Since most of the bristle carrier motions described herein can be modified by adjusting various structural features, the description of a motion herein shall be automatically understood to accommodate these variations. For example, a motion that is described as oscillating about an axis can also include components of other motions (e.g., a reciprocating linear motion). Motions that are intended to exclude such modifications shall be described herein with the modifier "primarily" (e.g., "primarily oscillating" or "primarily reciprocating") and are intended to exclude significant other types motion, but not other motions that might be incidental from manufacturing tolerances or variabilities or where it is difficult to completely eliminate another type of motion completely from the bristle carrier, as is sometimes the case. All motions described herein may be restricted to primarily the motion described if desired. The motions are best described in terms of the axes **X, Y,** and **Z.**

The **X** axis is generally referred to herein as the longitudinal axis and generally extends along a longitudinal or lengthwise dimension (as seen from the top planar view of the toothbrush) of the toothbrush head or the bristle carrier. For example, a longitudinal axis is an axis passing through the longest dimension of the toothbrush head. The **Y** axis is transverse, orthogonal or perpendicular to the **X** axis and generally bisects the toothbrush head into its left and right halves. The **Z** axis is transverse, orthogonal or perpendicular to the **X** and **Y** axes. It will be appreciated that axis orientations need not be exactly orthogonal or perpendicular to another axis and that some deviation from 90 degrees between the axes, particularly when these axes are used to describe a direction of motion. It should be understood that any axis orientation herein can be modified by the terms "generally" or "substantially" (e.g., "generally transverse" or "substantially transverse"). The word "substantially" implies some angular deviation, but not as much angular deviation from 90 degrees as the word "generally". No modifier indicates slight to no deviation from 90 degrees. Thus, a motion that is described as occurring about a first axis transverse to a second axis implies that the motion occurs at a 90 degree angle to the second axis with some slight deviation permitted (e.g., from manufacturing tolerances, etc.). If the motion is generally transverse or substantially transverse, a greater deviation from 90 degrees is contemplated. All the axes described herein can intersect another axis either generally or substantially transverse to said other axis.

Plane **X** contains the **X** axis and is generally referred to herein as the plane of the toothbrush or the plane of the toothbrush head. This plane generally extends along the longitudinal dimension of the toothbrush. The **Y** plane contains the **Y** axis and extends through the toothbrush and is perpendicular to the **X** plane. The **Y** plane either bisects the toothbrush or is parallel to a plane that does. The **Z** plane is perpendicular to both the **X** plane and the **Y** plane and contains the **Z** axis.

Furthermore, it is useful to address the terminology used in describing the preferred embodiment toothbrushes, bristle carriers, and the various drive mechanisms. As used herein, the term "forward" refers to the direction from the handle to the head while the term "rearward" refers to the direction from the head to the handle. A longitudinal direction is a direction that generally corresponds to a longitudinal or **X** axis but which may not lie in the same plane as the axis. For example, the longitudinal axes of a shaft and a bristle carrier may not extend in the same plane but generally extend in the same direction from a top planar view. Similarly, a neck and head that are angled with respect to each other may not have longitudinal axes that extend in the same plane, but do have axes that extend in the same general longitudinal direction from a top planar view. Many of the preferred embodiment electric toothbrushes typically have an elongated head with a longitudinal axis passing through the longest dimension thereof. This axis typically extends in the same general direction as the longitudinal axes of the toothbrush neck and/or shaft. This axis is generally referred to as the longitudinal axis of the toothbrush. By the phrase "same general direction," some angular deviation is contemplated between the axes.

Furthermore, it is useful to define the terms "fixed" or "static" bristles, and the term "movable" bristles. The terms fixed or static bristles refer to bristles that are secured or affixed to the toothbrush head or body of the toothbrush or other component thereof so that the bristles, and specifically, the base of the bristles, do not move with regard to the longitudinal axis of the toothbrush. Restated, fixed or static bristles refer to bristles that are affixed to the toothbrush such that their base or point of attachment does not move with respect to the toothbrush. It is recognized that the tips or regions distal from the base of a bristle or group of bristles may move as a result of flexing of the bristle. However, the base of a stationary, static, or fixed bristle does not move with respect to the brush. The term movable bristle refers to a bristle in which the base of the bristle moves with respect to the toothbrush, and particularly with respect to the longitudinal axis of the brush. Generally, this configuration is accomplished by affixing or supporting the base of the bristle to a mounting component, i.e. a bristle carrier or holder, that is movable with respect to the brush. Restated, a movable bristle is a bristle that is movable with respect to the longitudinal axis of the brush.

While the present invention is described herein with respect to a toothbrush, it will be appreciated that the present invention also relates to merely a toothbrush head, such as a detachable or replaceable toothbrush as is known in the art. The detachable or replaceable toothbrush head may or may not include a portion of a toothbrush neck and may or may not include a shaft.

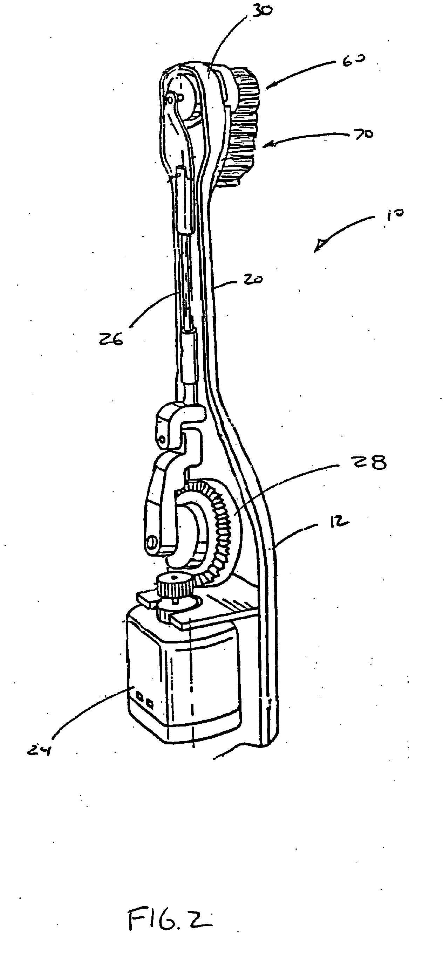

Referring to Figs. 1, 2 and 3, a toothbrush 2 in accordance with the present invention will now be described. The toothbrush **10** comprises an elongated body having a handle **12,** a head **30,** and a neck **20** extending between the handle **12** and the head **30.** A switch **22** is provided or made accessible along the outer region of the body. The switch **22** actuates an electrical motor **24** (Fig. 2) contained within the handle **12** of toothbrush **10.** The motor and a drive mechanism as described herein drive one or more bristle carriers disposed near a forward end of the toothbrush. Specifically, the toothbrush 10 further includes a first bristle carrier **60** located adjacent a forward-most first end and a second bristle carrier **70** disposed between the first bristle carrier and the handle **12.** As described in greater detail herein, upon activation of the drive mechanism, the first and second bristle carriers undergo a particular combination of motions.

The electrical motor **24** is operatively connected to a shaft **26** that in turn is operatively connected to the first and second bristle carriers. While the shaft **26** of toothbrush **10** is connected to each of the first bristle carriers **60** and **70,** it is contemplated that the shaft **26** might be operatively connected to only one of the bristle carriers and the second bristle carrier is driven by the bristle carrier connected to the shaft. The shaft interconnecting the motor with the movable bristles carriers can rotate, oscillate, reciprocate, undergo an orbital motion, or a combination thereof. Gearing **28** may be provided between the shaft **26** and the motor **24** to facilitate transmission of motion between the motor and the movable bristle carriers. A wide array of drive motor and/or gearing configurations may be utilized in the preferred embodiment toothbrushes described herein. For example, various drive mechanisms described in U.S. Patents 6,178,579; 6,189,693; 6,360,395; 6,371,294; 5,226,206; 5,524,312; 5,383,242; 5,465,444; 5,504,959; 5,836,030; 4,845,795; 5,404,608; 5,359,747; and 5,617,601 may be utilized. The elongated hollow body also includes an interior chamber containing a voltage source, such as one or more batteries (not shown), for powering the motor **24.** A removable end cap is provided to enclose the interior chamber and provide a seal against external agents for the components inside the toothbrush body.

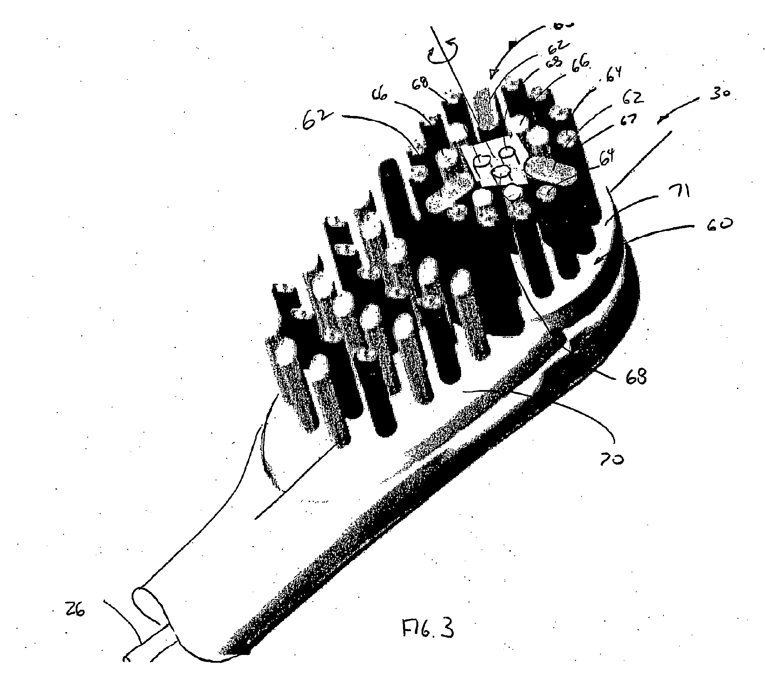

The toothbrushes of the present invention may comprise one, two, three or more movable bristle carriers that may undergo a wide variety of motions. For example, the movable bristle carrier may undergo angular motion, linear motion, curvilinear motion, or orbital motion. The movement of the bristle carrier may be constant or periodic. A preferred motion for the first forward-most movable bristle carrier of the preferred embodiment toothbrushes described herein is an oscillating motion about an axis that is perpendicular to the longitudinal axis of the toothbrush, the toothbrush head, and/or bristle carrier, as shown in Fig. 3. The preferred motion for the second movable bristle carrier of the preferred embodiment toothbrushes described herein is a reciprocating motion in the same general direction as the longitudinal axis of the toothbrush, the toothbrush head, and/or bristle carrier.

One or more of the bristle carriers has one or more recessed regions that serve to retain toothpaste or dentifrice material at the bristle tips during brushing. Maintaining dentifrice between the bristles or cleaning elements can provide improve the efficacy of the agent(s) incorporated in the dentifrice material. Additionally, such recessed regions are particularly beneficial when used in conjunction with one or more movable bristle carriers since such movement tends to cause dentifrice previously applied thereto, to fall away or separate from the brush head upon actuation of the electric toothbrush.

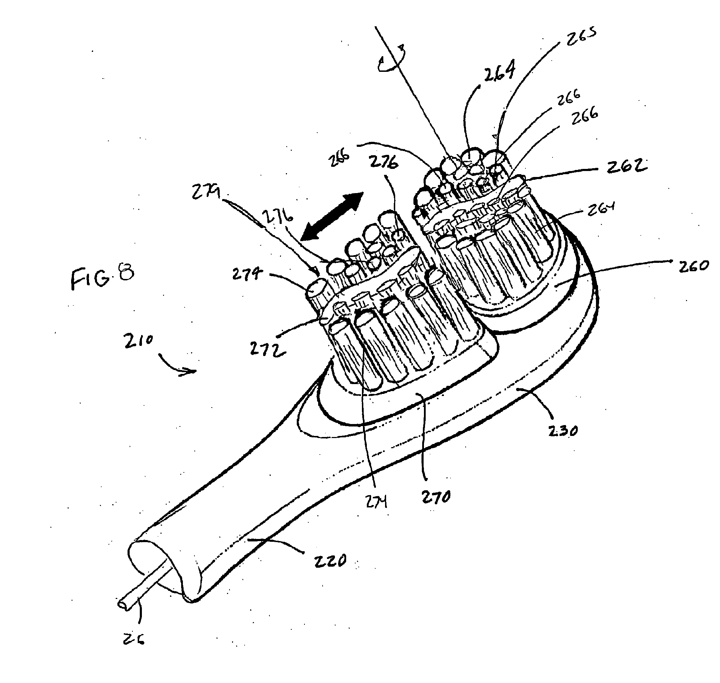

Referring to Figs. 3, 4 and 5, the first bristle carrier **60** includes three elongate composite tufts **62** that form a floor of three recessed regions **65.** The composite tufts **62** are formed from a plurality of closely spaced tufts that, when placed in close relationship, appear to form a single composite tuft **62.** Methods for forming the composite tufts **62** are described in U.S. patent publication no. US 2001/0023516. The composite tufts **62** may be formed from between 2 and 6 smaller, closely spaced tufts of bristles. The composite tufts 62 are bordered on two or more sides by taller tufts **64,** and in a preferred arrangement, the composite tufts **62** are bordered on each of their elongate sides by the taller tufts **64** and their elongate sides are aligned in a radial direction from the center of the bristle carrier **60.** Since the bristle carrier **60** oscillates about an axis that is perpendicular to the longitudinal axis of the toothbrush and/or head, the radial alignment of the tufts **62** on the bristle carrier **60** causes the tufts **62** to perform a broad sweeping motion when in contact with the teeth. This sweeping motion can assist with polishing the teeth, especially when a dentifrice material is retained in a recessed region. For bristle carriers that undergo other motions, it is preferred that the elongate dimension of the tufts **62** is arranged transverse to the direction of motion to provide a sweeping motion across the length of the tuft **62.** An example of such an arrangement is shown in Fig. 8, which is discussed more fully hereafter.

The composite tufts **62** can extend from the outer edge of the bristle carrier to the center of the bristle carrier **60.** In an alternate embodiment, the elongate sides **67** of the composite tufts **62** are greater than about 50 %, 65%, 80% and/or less than about 250 % (e.g., a curvilinear elongate side that extends across the entire bristle carrier, such as shown in Fig. 8), 200%, 150% and less than about 90% of the radius R of the bristle carrier **60.** The elongate sides **67** may have a length L greater than about 3 mm, or greater than about 4mm, or greater than about 5mm or greater than about 6 mm and/or less than about 14mm, or less than about 12mm, or less than about 9mm. The above-described dimensions are also applicable to tufts that are irregularly shaped or circular in shape, in which case the dimension refers to the perimeter of the tuft. The top surface **69** that forms the floor or valley of the recessed region has a width W between about 1mm and about 3mm or between about 1.25 mm and about 1.75 mm. The top surface **69,** in one embodiment, is substantially flat over the width W to better support and retain the dentifrice material. The total surface area formed by the bristle free ends of the tufts **62** is between about 10% and about 40% of the total surface area formed by the free ends of all the tufts of the first bristle carrier **60.** In another embodiment, the surface area formed by the bristle free ends of the tufts 62 is greater than about 15%, or greater than about 20% or greater than about 30% or greater than 35% and/or less than about 40% or less than about 35% or less than about 30% of the total surface area formed by the free ends of all the tufts of the first bristle carrier **60.** These preferred ranges provide a good balance between adequate surface area for retaining a dentifrice material and adequate surface area for bristles that primarily clean the teeth (e.g., tall tufts **64).**

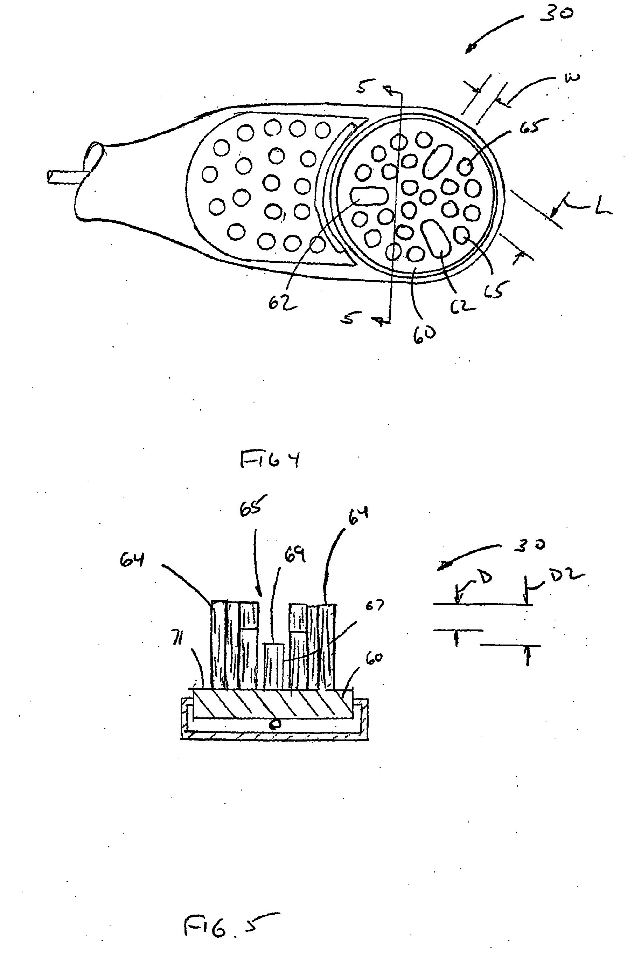

As best seen in Fig. 5, each of the composite tufts **62** have a surface **69** formed by the free ends of the bristles forming each composite tuft **62.** The surface **69** forms the floor or valley of the recessed region. The surfaces **69** of the composite tufts **62** are preferably continuous. A continuous surface is a surface that does not have a significant gap thereacross that extends down to the top surface **71** of the bristle carrier such that the surface is separated into distinct portions. Generally, tufts having a spacing between about 0.5 mm and about 0.7 mm are closely spaced enough to form a composite tuft having a continuous surface, although this spacing can be affected by the angle that the closely spaced tufts form with the top surface 71 of the bristle carrier. The top surface **69** of the composite tufts **62** (which is also the surface that forms the floor of the recessed region **65)** is preferably an irregular surface. An irregular surface is a surface having height variations that assist in retaining a dentifrice material. For example, since the tufts **62** are formed from a plurality of bristles, the individual bristle tips, when combined, form an irregular surface. While the surface **69** is irregular at a micro scale, overall, the bristle tops form a substantially flat or planar surface at a macro scale, as best seen Fig. 5. One method of manufacturing the tufts **62** is described in US publication no. US 2001/0023516.

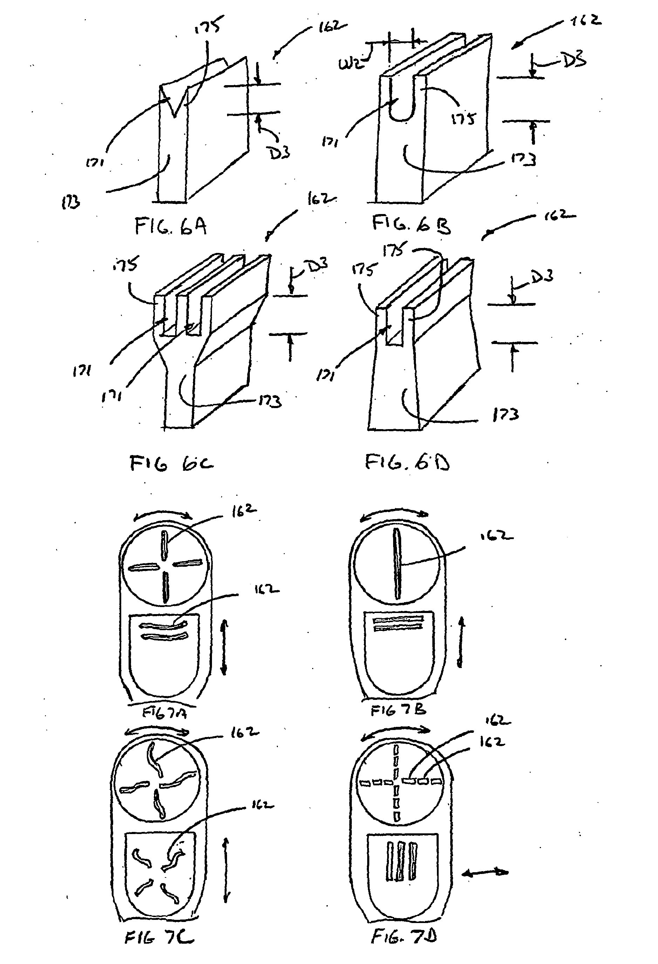

A continuous surface can also be formed by an integral, single, upstanding element that is not formed from a plurality of bristles. For simplicity, these integral elements are referred to herein as integral tufts. Examples of the integral tufts **162** are shown in Figs. 6A to 6D. Thus, the word "tuft" is used herein to denote both the previously described composite tufts formed from a plurality of bristles as well as integral, upstanding elements which are not formed from bristles but are rather single flexible structures formed from an elastomeric material, such as a thermoplastic elastomer. The integral tufts **162** can be formed by injection molding. Generally, integral tufts can be substituted for composite tufts and vice versa. The free end of the integral tufts **162** have a one or more slits **171** therein. The number of slits can be between 1 and 5, and in an alternate embodiment is between 1 and 3. The slit **171** preferably extends from one side **173** of the integral tuft **171** to the other side so that a pair of flexible upstanding walls **175** are formed. The walls **175** can be the same height or may differ in height. The depth D3 of the slit **171** can be between about 0.5 mm and about 3 mm or between about 1 mm and about 2 mm. The width W2 of the slits **171** is between about 0.5 mm and about 2 mm or between about 0.75 mm and about 1 mm. The slits assist in retaining a dentifrice material during use. The base of the tufts **162** can be provided in a variety of forms. The base might widen, as shown in Fig. 6D, in a direction away from the free end. The shape of the slit, in either a plan or elevation view, might also vary. For example, in an elevation view, the slit might be V-shaped, U-shaped, or irregularly shaped, as shown in Figs. 6A to 6D. One integral tuft162 might be provided, as shown in Fig. 3, or a plurality of integral tufts might be positioned adjacent each other as shown in Figs. 6A to 6D. Or the plurality of integral tufts **162** might be disposed across a bristle carrier with tufts of bristles disposed there between, as shown in Fig. 8. The outer surface of the integral tufts **162** can be provided with surface roughness or protrusions to further enhance the ability of the integral tufts **162** to retain a dentifrice material. The upstanding flexible walls **175** may also assist with both metering or dosing the material disposed within the slits **171** as they flex during use, thereby squeezing the material out of the slit **171,** as well as polishing the teeth and/or massaging the gums. The integral tufts described here can also be applied to a manual toothbrush.

Referring to Figs. 7A to 7C, the integral tufts **162** can be provided in a variety of arrangements on one or more bristle carriers. In the embodiments of Fig. 7, first and second bristle carriers that oscillate and reciprocate, respectively, are illustrated with one or more integral tufts **162.** The integral tufts have a slit therein. The integral tufts might have a linear shape (e.g., Fig. 7B), an arcuate shape (e.g., Fig. 7C), or a combination thereof in plan view. Preferably, between 1 and 6 integral tufts **162** might be provided on a bristle carrier, although more could be provided such as in Fig. 7D wherein a plurality of integral tufts are arranged to effectively form a larger continuous tuft. Other bristle carrier movements and arrangements of the integral tufts **162** can be provided.

Referring again to Fig. 5, the tall bristle tufts **64** are disposed about the periphery of the bristle carrier **60** in a circular arrangement. The depth D2 between the tall tufts **64** and the composite tufts **62** is between about 1 mm and about 3 mm and in another embodiment between about 1.5 mm and about 2.5 mm. To provide improved dispensation of a dentifrice material from the recessed regions, intermediate bristle tufts **66** can optionally be provided between the tall tufts **64** and the center of the bristle carrier **60.** The intermediate tufts **66** have a height that is between the height of the tall tufts **64** and the composite tufts **62.** The intermediate tufts **66** are provided in a circular arrangement The depth D between the tall tufts **64** and the intermediate tufts **66** is between about 0.25 mm and about 1 mm, and in an alternate embodiment is between about 0.5 mm and about 0.75 mm.

At least some of the tall tufts **64** and the intermediate tufts **66** are disposed adjacent, preferably immediately adjacent, a portion of the perimeter of the composite tufts **62** to form the recessed regions. More preferably, at least some of the tall and/or intermediate tufts are disposed on opposing sides of the perimeter of the composite or integral tufts to form the recessed region. The tall and intermediate tufts may partially or completely encircle the shorter composite and integral tufts. Preferably, the tall and/or intermediate tufts are disposed adjacent least about 60%, or at least about 70%, or at least about 80%, or at least about 90% and/or less than about 100%, or less than about 90%, or less than about 80%, or less than about 70% of the perimeter of the composite (or integral) tuft to form a recessed region. While the tall and intermediate tufts have been shown in a preferred arrangement, it is contemplated that tall tufts and be substituted for intermediate tufts and vice versa. Further, while the tall and intermediate tufts have been shown with substantially planar free end surfaces, it is contemplated that a profile can be provided at the free ends of the tall and intermediate tufts.

Optionally disposed near the center of the bristle carrier **60** are three center bristle tufts **68** that have a height about the same as the height of the composite tufts **62.** In an alternate embodiment, the three center bristle tufts **68** can have a height that is less than the height of the composite tufts **62.** Since the oscillating motion at the center of the bristle carrier **60** is small compared to the movement near the periphery of the bristle carrier **60,** the center tufts **68** can be spaced apart so that discrete tufts are formed rather than a continuous surface stretching across and between the center tufts **68.** The tufts **62,** intermediate tufts **66,** the center tufts **68,** and tall tufts **64** form a cup or U-shaped profile in plan view, as best seen in Fig. 5. This shape can facilitate retaining and dispensing a dentifrice material from the recessed regions.

Fig. 8 is a perspective view of another toothbrush **210** in accordance with the present invention. The toothbrush **210** comprises an elongated body having a handle, ahead **230,** and a neck **220,** extending between the handle and the head **230,** as previously shown and described with respect to Fig. 1. The toothbrush **210** further includes a first bristle carrier **260** and a second bristle carrier **270** located adjacent the neck **220.** The first bristle carrier **260** oscillates about an axis perpendicular to the longitudinal axis of the toothbrush and/or head, and the second bristle carrier **270** reciprocates in a direction along the longitudinal axis of the toothbrush and/orhead, although other motions can be provided. The first bristle carrier **260** includes an elongate composite tuft **262.** The elongate composite tuft is preferably disposed in a line generally extending across the diameter of the face of the bristle carrier 260. This line may be straight, arcuate, or a combination thereof. The first bristle carrier 260 further includes a plurality of tall tufts **264** that are disposed about at least a portion, and preferably a majority of the outer periphery of the bristle carrier **260.** The bristle carrier **260** also includes a plurality of intermediate tufts **266** generally disposed within the interior region of the face of the carrier **260.** Preferably, some of the intermediate tufts **266** are disposed between some of the tall tufts **264** and the composite tuft **262.** The intermediate tufts **266** have a height between the height of tall tufts **264** and the composite tuft **262.** The intermediate tufts **266** are disposed along the sides of the composite tuft **262.** The intermediate tufts **266** are disposed about a portion of the perimeter of the composite tuft **262** to form a first recessed region **265.**

The second bristle carrier **270** includes an elongate second composite tuft **272** preferably extending along the length, or substantially so, of the face of the second bristle carrier **270.** The elongate composite tuft **272** is preferably arranged in a line and most preferably in an arcuate line that extends generally in the same direction as the longitudinal axis of the toothbrush **210.** The elongate composite tuft **272** has a forward-most end that generally aligns with the rearward-most end of the composite tuft **262** of the first bristle carrier **260.** Also disposed on the second bristle carrier **270** are a plurality of tall tufts **274** that are disposed along the outer periphery of the bristle carrier **270.** Additionally, the second bristle carrier **270** includes a plurality of intermediate tufts **276** disposed between the tall tufts **274** and the composite tuft **272** of the second bristle carrier **270.** The intermediate tufts **276** have a height between that of the tall tufts and the composite tuft **272** and are disposed along the sides of the composite tuft **272.** The intermediate tufts **276** are disposed adjacent at least some of the perimeter of the composite tuft **272** to form a second recessed region **279.** The first and second recessed regions are disposed in close proximity so that an essentially unitary composite recessed region extending between the first and second bristle carriers is formed. The dimensions and spacing of the composite tufts, intermediate tufts, and tall tufts may be further varied as discussed elsewhere herein.

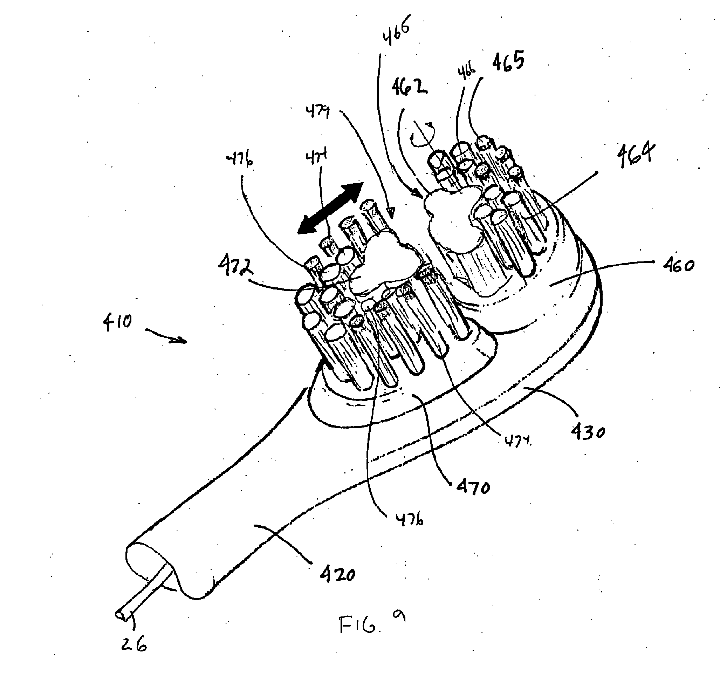

Fig. 9 is a perspective view of another toothbrush **410** in accordance with the present invention. The toothbrush **410** comprises an elongated body having a handle, a head **430,** and a neck **420,** extending between the handle and the head **430,** as previously shown and described with respect to Fig. 1. The toothbrush **410** further includes a first bristle carrier **460** and a second bristle carrier **470** located adjacent the neck **420.** The first bristle carrier **460** oscillates about an axis perpendicular to the longitudinal axis of the toothbrush and/or head, and the second bristle carrier **470** reciprocates in a direction along the longitudinal axis of the toothbrush and/or head, although other motions can be provided. A portion of a first composite tuft **462** is located at the rearward-most portion of the first bristle carrier **460** and, preferably, extends into the interior of the first bristle carrier **460.** The composite tuft **462** is arcuate. A plurality of tall tufts **464** having a height that is greater than the height of the composite tuft **462** are disposed about the periphery of the first bristle carrier **460.** Intermediate tufts **466** can be provided between the tall tufts **464** and the composite tuft **462.** The intermediate tufts 466 have a height that is between the height of the tall tufts 464 and the composite tuft **462.** Some of the intermediate tufts and/or the tall tufts **464** can be provided about a portion of the perimeter of the first composite tuft **462.** Preferably, the intermediate and/or tall tufts are provided adjacent the forward portion of the perimeter and not adjacent the reward portion of the perimeter so as to form a first recessed region **465.** Alternatively, tall and/or intermediate tufts might be placed at the forward-most portion of the second bristle carrier adjacent the first composite tuft **462** so as to further define the first recessed region **465.** The composite tuft **462** has a top surface that forms a floor of the first recessed region **465** which helps retain a dentifrice material in the first recessed region **465** of the bristle carrier **460.**

The second bristle carrier **470** optionally includes an arcuate second composite tuft **472** which is disposed along a forward region or forward and interior region of the second bristle carrier **470.** The second bristle carrier **470** further includes a plurality of tall tufts **474** arranged along the outer periphery of the second bristle carrier **470.** Additionally, the second bristle carrier **470** further includes a plurality of intermediate tufts **476** disposed between the tall tufts **474** and the composite tuft **472.** The intermediate tufts **476** have a height between the height of the tall tufts **474** and the composite tuft **472.** Some of the intermediate tufts **476** and/or the tall tufts **474** can be provided about a portion of the perimeter of the second composite tuft **472.** Preferably, the intermediate and/or tall tufts are provided adjacent the rearward portion of the perimeter and not adjacent the forward portion of the perimeter so as to form a second recessed region **479.** Alternatively, tall and/or intermediate tufts might be placed at the rearward-most portion of the first bristle carrier adjacent the second composite tuft **462** so as to further define the second recessed region **479.** Preferably, however, the first and second recessed regions and first and second composite tufts are arranged in close proximity so that an essentially composite recessed region extending from the first bristle carrier to the second bristle carrier is formed. The second composite tuft **472** has a top surface that forms a floor of a recessed region **479** which helps retain a dentifrice material in the second recessed region **479** of the second bristle carrier **470.** The dimensions and spacing of the composite tufts, intermediate tufts, and tall tufts may be further varied as discussed elsewhere herein.

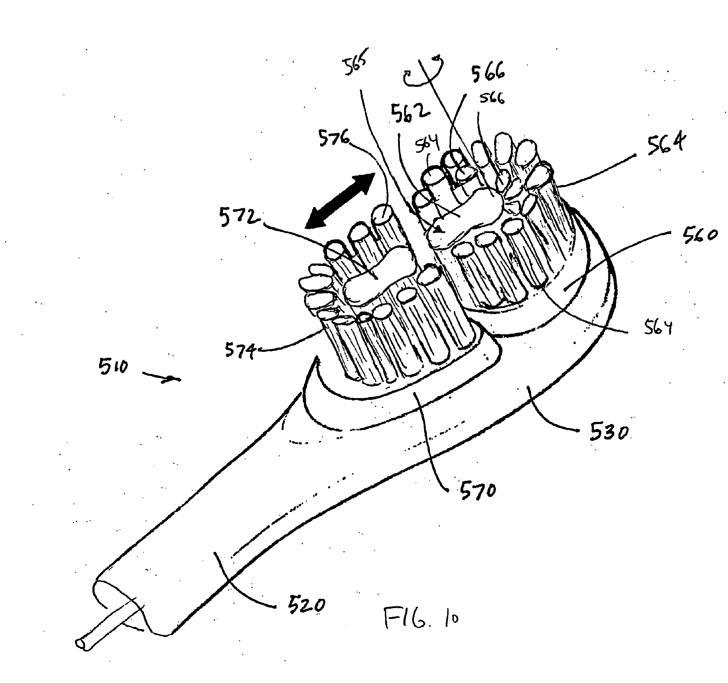

Fig. 10 is a perspective view of yet another toothbrush **510** in accordance with the present invention. The toothbrush **510** comprises an elongated body having a handle, a head **530,** and a neck **520,** extending between the handle and the head **530,** as previously shown and described with respect to Fig. 1. The toothbrush **510** further includes a first bristle carrier **560** and a second bristle carrier **570** located adjacent the neck **520.** The first bristle carrier **560** oscillates about an axis perpendicular to the longitudinal axis of the toothbrush and/or head, and the second bristle carrier **570** reciprocates in a direction along the longitudinal axis of the toothbrush and/or head, although other motions can be provided. The first bristle carrier **560** includes a composite tuft **562.** The first bristle carrier **560** further includes a plurality of tall tufts **564.** Preferably, the tall tufts **564** are disposed at the forward-most portion of the first bristle carrier **560** and/or along the sides thereof. At least some, and preferably substantially all, the free ends of one or more of the tall tufts **565** at the forward-most portion of the first bristle carrier **560** form an inclined plane that faces toward the handle of the toothbrush **510.** In other words, the free ends of the bristles of the tall tufts increase in height in a direction toward the forward-most portion of the first bristle carrier **560.** Tall tufts **566** disposed along the sides of the first bristle carrier **560** may have free ends which form a plane perpendicular to the direction of the tuft (as shown in Fig. 10) or, alternatively, might form an inclined plane as well. Intermediate tufts **566** are disposed adjacent a portion of the periphery of the first bristle carrier **560.** The intermediate tufts **566** have an average height that is between the height of the tall tufts **564** and the first composite tuft **562.** Preferably, the inclined planes of the intermediate tufts **566** in combination with the inclined planes of the tall tufts **564** form a generally unitary or composite inclined surface. At least some of the intermediate tufts **566** and/or the tall tufts **564** are disposed adjacent a portion of the perimeter of the first composite tuft **562** to form a first recessed region **565.** Preferably, the rearward portion of the first composite tuft 562 does not have tall or intermediate tufts disposed against its perimeter.

The second bristle carrier **570** is arranged in a similar manner to the tufts of the first bristle carrier **560.** A second composite tuft **572** is disposed along an interior and forward region of the face of the second bristle carrier **570.** The second carrier **570** further includes a plurality of tall tufts **574** disposed at the rearward-most portion of the second bristle carrier **570.** At least some, and preferably substantially all, the free ends of one or more of the tall tufts **574** form an inclined plane that faces away the handle of the toothbrush **510.** In other words, the free ends of the bristles of the tall tufts increase in height in a direction toward the rearward most portion of the second bristle carrier **570.** The tall tufts **574** are disposed adjacent a portion of the perimeter of the second composite tuft **572** to form a second recessed region **579.** Preferably, tall tufts **574** are not disposed adjacent the forward portion of the perimeter of the second composite tuft **572** so that the first and second recessed regions form a composite elongate recessed region extending from the first bristle carrier to the second bristle carrier. The dimensions and spacing of the composite tufts, intermediate tufts, and tall tufts may be varied as previously described.

It will be appreciated that the toothbrushes of the present invention may have one or more groups or tufts of static bristles or other cleaning members may be provided in conjunction with the moving bristles. Static bristles might be provided between the bristle carriers or the static bristles might partially or completely encircle one or more of the bristle carriers. While the bristle carriers have been illustrated for simplicity with tufts of bristles that extend in a direction substantially perpendicular to the longitudinal axis of the bristle carrier from which they extend, it is contemplated that the bristles might be arranged differently. Some or all of the bristles might extend in a direction which forms an acute angle with a top surface of the bristle carrier, and may extend in a forward or rearward direction. In another embodiment, some of the bristles might extend outwardly away from the head, in another direction, again forming an acute angle with respect to the top surface of the bristle carrier. Other elastomeric bristles or bristles of varying height might also be used, such as described in US Patent Nos. Des. 330,286 and Des. 434,563. Other bristle arrangements suitable for use include those arrangements described in whole or part in US Patent Nos. 6,006,394; 4,081,876; 5,046,213; 5,335,389; 5,392,483; 5,446,940; 4,894,880; and International Publication No. WO99/23910.

The housing and the brush head may be formed from a wide array of polymers. In Ule following description of the preferred polymer materials for use herein, the abbreviations that are commonly used by those of skill in the art to refer to certain polymers appear in parentheses following the full names of the polymers. The polymer is preferably polypropylene ("PP"), or may be selected from the group consisting of other commercially available materials, such as polystyrene ("PS"), polyethylene ("PB"), acrylonitrile-styrene copolymer ("SAN"), and cellulose acetate propionate ("CAP"). These materials may be blended with one or more additional polymers including a thermoplastic elastomer ("TPB"), a thermoplastic olefin ("TPO"), a soft thermoplastic polyolefin (e.g., polybutylene), or may be selected from other elastomeric materials, such as etheylene-vinylacetate copolymer ("EVA"), and ethylene propylene rubber ("EPR"). Examples of suitable thermoplastic elastomers herein include styrene-ethylene-butadiene-styrene ("SEBS"), styrene-butadiene-styrene ("SBS"), and styrene-isoprene-styrene ("SIS"). Example of suitable thermoplastic olefins herein include polybutylene ("PB"), and polyethylene ("PE"). Techniques known to those of skill in the art, such as injection molding, can be used to manufacture the toothbrush of the present invention.

## Claims

1. An electric toothbrush (10, 210, 410, 510) comprising:
a) an elongated body having a handle (12), a head (30, 230, 430, 530), and a neck (20, 220, 420, 520) extending between the handle and the head, the body defining an interior chamber;
b) a motor (24) within the chamber and shaft (26) operatively connected to the motor;
c) a first movable bristle carrier disposed on the head (30, 230, 430, 530), the shaft (26) operatively connected to the first bristle carrier (60, 260, 460, 560) to impart motion thereto, the first bristle carrier having a first composite tuft (62, 162, 262, 462, 562) formed from a plurality of closely spaced bristle tufts and a plurality of second bristle tufts (64, 264, 464, 564), wherein the second tufts have a height that is greater than a height of the first composite tuft, the bristles of the first composite tuft having free ends and the bristles of the second tufts having free ends, wherein the plurality of second tufts are disposed adjacent at least 60% of a perimeter of the composite tuft to form a first recessed region (465, 565);
**characterized in that**
said first composite tuft (62, 162, 262, 462, 562) has a continuous surface free of gaps that is formed by the free ends of the bristles of said plurality of closely spaced bristle tufts, and
the total surface area of the bristles of the first composite tuft is greater than the total surface area of the bristles of any of the second tufts (64, 264, 464, 564).

2. The electric toothbrush of claim 1, wherein said plurality of second tufts (64, 264, 464, 564) are disposed on opposing sides of said perimeter of said first composite tuft (62, 162, 262, 462, 562).

3. The electric toothbrush of claim 1 or 2, wherein the plurality of second tufts (64, 264, 464 564) is disposed adjacent at least 80% of the perimeter of the first composite tuft (62, 162, 262, 462, 562).

4. The electric toothbrush of claim 1, wherein the plurality of second tufts completely encircles the perimeter of the first composite tuft.

5. The electric toothbrush of claim 1, wherein the first composite tuft has an elongate side (67) in a top plan view.

6. The electric toothbrush of claim 5, wherein the first bristle carrier (60, 260, 460, 560) is circular in plan view and wherein the elongate side (67) is aligned in a radial direction of the first bristle carrier.

7. The electric toothbrush of Claim 1, wherein the first bristle carrier (60, 260, 460, 560) oscillates about an axis generally perpendicular to a longitudinal axis of the head (30, 230, 430, 530).

8. The electric toothbrush of one of the preceding claims, wherein the first bristle carrier (60, 260, 460, 560) comprises a plurality of the first composite tufts (62, 262, 462, 562).

9. The electric toothbrush of one of the preceding claims, wherein the first composite tuft has an irregular end surface.

10. The electric toothbrush of one of the preceding claims, wherein some of the second tufts have a first height and some have a second height greater than the first height.

11. The electric toothbrush of Claim 10, wherein the height of the first composite tuft (62, 162, 262, 462, 562) is between 0.5 mm and 2 mm less than the height of the second tufts having the first height.

12. The electric toothbrush of Claim 1, wherein the head (30, 230, 430, 530) further comprises a second movable bristle carrier operatively connected to the shaft (26), the second movable bristle carrier having a second composite tuft (272, 472, 572) and a plurality of third bristle tufts (274, 474, 574), wherein the third tufts have a height that is greater than a height of the second composite tuft, and wherein the plurality of third tufts are disposed adjacent a portion of a perimeter of the second composite tuft to form a second recessed region (279, 479, 579).

13. The electric toothbrush of Claim 12, wherein the first and the second recessed regions form a composite recessed region extending from the first movable bristle carrier to the second movable bristle carrier.

14. An electric toothbrush (10, 210, 410, 510) comprising:
a) an elongated body having a handle (12), a head (30, 230, 430, 530), and a neck (20, 220, 420, 520) extending between the handle and the head, the body defining an interior chamber;
b) a motor (24) within the chamber and shaft (26) operatively connected to the motor;
c) a first movable bristle carrier disposed on the head (30, 230, 430, 530), the shaft (26) operatively connected to the first bristle carrier (60, 260, 460, 560) to impart motion thereto, the first bristle carrier having at least a first tuft and a plurality of second bristle tufts, wherein the second tufts of bristles have a height that is greater than a height of the first tuft, wherein the plurality of second tufts essentially encircle the first tuft to form a first recessed region;
**characterized in that**
the first tuft is an integral tuft (162) with a continuous surface and a slit (171) therein adjacent a free end of the tuft, the integral tuft (162) having an elongate shape in a top plan view, wherein the elongate dimension of the integral tuft (162) is arranged transverse to the direction of motion of the first bristle carrier (60, 260, 460, 560) and **the slit (171) is V-shaped in elevation.**

15. The electric toothbrush of Claim 14 wherein the first bristle carrier comprises a plurality of the integral tufts (62, 162, 262, 462, 562).

16. The electric toothbrush of Claim 15 wherein the plurality of integral tufts (62, 162, 262, 462, 562) are equally spaced about the first bristle carrier.

## Patentansprüche

1. Elektrische Zahnbürste (10, 210, 410, 510), umfassend:
a) einen länglichen Körper mit einem Griff (12), einem Kopf (30, 230, 430, 530) und einem Hals (20, 220, 420, 520), der sich zwischen dem Griff und dem Kopf erstreckt, wobei der Körper eine innere Kammer definiert;
b) einen Motor (24) in der Kammer und eine Welle (26), die wirkmäßig mit dem Motor verbunden ist;
c) einen ersten beweglichen Borstenträger, der am Kopf (30, 230, 430, 530) angeordnet ist, wobei die Welle (26) wirkmäßig mit dem ersten Borstenträger (60, 260, 460, 560) verbunden ist, um diesem eine Bewegung mitzuteilen, wobei der erste Borstenträger ein erstes Verbundbüschel (62, 162, 262, 462, 562), das aus einer Vielzahl von eng beieinander angeordneten Borstenbüscheln besteht, und eine Vielzahl von zweiten Borstenbüscheln (64, 264, 464, 564) aufweist, wobei die zweiten Büschel eine Höhe aufweisen, die größer ist als eine Höhe des ersten Verbundbüschels, wobei die Borsten des ersten Verbundbüschels freie Enden aufweisen und die Borsten des zweiten Büschels freie Enden aufweisen, wobei die Vielzahl von zweiten Büscheln angrenzend an mindestens 60 % eines Umfangsrandes des Verbundbüschels angeordnet ist, um eine erste zurückgesetzte Region (465, 565) zu bilden;
**dadurch gekennzeichnet, dass**
das erste Verbundbüschel (62, 162, 262, 462, 562) eine zusammenhängende Oberfläche aufweist, die frei von Lücken ist und die aus den freien Enden der Borsten aus der Vielzahl von eng beieinander angeordneten Borstenbüscheln gebildet wird, und
die gesamte Oberfläche der Borsten des ersten Verbundbüschels größer ist als die gesamte Oberfläche der Borsten eines beliebigen der zweiten Büschel (64, 264, 464, 564).

2. Elektrische Zahnbürste nach Anspruch 1, wobei die Vielzahl von zweiten Büscheln (64, 264, 464, 564) an einander gegenüber liegenden Seiten des Umfangsrands des ersten Verbundbüschels (62, 162, 262, 462, 562) angeordnet ist.

3. Elektrische Zahnbürste nach Anspruch 1 oder 2, wobei die Vielzahl von zweiten Büscheln (64, 264, 464, 564) angrenzend an mindestens 80 % des Umfangsrands des ersten Verbundbüschels (62, 162, 262, 462, 562) angeordnet ist.

4. Elektrische Zahnbürste nach Anspruch 1, wobei die Vielzahl von zweiten Büscheln rings um den gesamten Umfangsrand des ersten Verbundbüschels angeordnet ist.

5. Elektrische Zahnbürste nach Anspruch 1, wobei das erste Verbundbüschel in der Draufsicht eine Längsseite (67) aufweist.

6. Elektrische Zahnbürste nach Anspruch 5, wobei der erste Borstenträger (60, 260, 460, 560) in der Draufsicht kreisförmig ist und wobei die Längsseite (67) in radialer Richtung des ersten Borstenträgers ausgerichtet ist.

7. Elektrische Zahnbürste nach Anspruch 1, wobei der erste Borstenträger (60, 260, 460, 560) um eine Achse schwingt, die im Wesentlichen senkrecht ist zu einer Längsachse des Kopfes (30, 230, 430, 530).

8. Elektrische Zahnbürste nach einem der vorangehenden Ansprüche, wobei der erste Borstenträger (60, 260, 460, 560) eine Vielzahl von ersten Verbundbüscheln (62, 262, 462, 562) aufweist.

9. Elektrische Zahnbürste nach einem der vorangehenden Ansprüche, wobei das erste Verbundbüschel eine unregelmäßige Stirnfläche aufweist.

10. Elektrische Zahnbürste nach einem der vorangehenden Ansprüche, wobei von den zweiten Büscheln einige eine erste Höhe aufweisen und einige eine zweite Höhe aufweisen, die größer ist als die erste Höhe.

11. Elektrische Zahnbürste nach Anspruch 10, wobei die Höhe des ersten Verbundbüschels (62, 162, 262, 462, 562) zwischen 0,5 und 2 mm geringer ist als die Höhe des zweiten Büschels mit der ersten Höhe.

12. Elektrische Zahnbürste nach Anspruch 1, wobei der Kopf (30, 230, 430, 530) ferner einen zweiten beweglichen Borstenträger aufweist, der wirkmäßig mit der Welle (26) verbunden ist, wobei der zweite bewegliche Borstenträger ein zweites Verbundbüschel (272, 472, 572) und eine Vielzahl von dritten Borstenbüscheln (274, 474, 574) aufweist, wobei die dritten Büschel eine Höhe aufweisen, die größer ist als eine Höhe des zweiten Verbundbüschels, und wobei die Vielzahl von dritten Büscheln angrenzend an einen Teil des Umfangsrands des zweiten Verbundbüschels angeordnet ist, um eine zweite zurückgesetzte Region (279, 479, 579) zu bilden.

13. Elektrische Zahnbürste nach Anspruch 12, wobei die ersten und zweiten zurückgesetzten Regionen einen Verbund von zurückgesetzten Regionen bilden, der sich vom ersten beweglichen Borstenträger zum zweiten beweglichen Borstenträger erstreckt.

14. Elektrische Zahnbürste (10, 210, 410, 510), umfassend:
a) einen länglichen Körper mit einem Griff (12), einem Kopf (30, 230, 430, 530) und einem Hals (20, 220, 420, 520), der sich zwischen dem Griff und dem Kopf befindet, wobei der Körper eine innere Kammer definiert;
b) einen Motor (24) innerhalb der Kammer und eine Welle (26), die wirkmäßig mit dem Motor verbunden ist;
c) einen ersten beweglichen Borstenträger, der am Kopf (30, 230, 430, 530) angeordnet ist, wobei die Welle (26) wirkmäßig mit dem ersten Borstenträger (60, 260, 460, 560) verbunden ist, um diesem eine Bewegung mitzuteilen, wobei der erste Borstenträger mindestens ein erstes Büschel und eine Vielzahl von zweiten Borstenbüscheln aufweist, wobei die zweiten Borstenbüschel eine Höhe aufweisen, die größer ist als eine Höhe des ersten Büschels, wobei die Vielzahl von zweiten Büscheln im Wesentlichen rings um das erste Büschel angeordnet sind, um eine erste zurückgesetzte Region zu bilden;
**dadurch gekennzeichnet, dass**
das erste Büschel ein eine Einheit bildendes Büschel (162) mit einer zusammenhängenden Oberfläche und einem Schlitz (171) darin angrenzend an ein freies Ende des Büschels ist, wobei das eine Einheit bildende Büschel (162) in der Draufsicht eine längliche Form aufweist, wobei die Längsabmessung des eine Einheit bildenden Büschels (162) quer zur Bewegungsrichtung des ersten Büschelträgers (60, 260, 460, 560) angeordnet ist und der Schlitz (171) im Aufriss eine V-Form aufweist.

15. Elektrische Zahnbürste nach Anspruch 14, wobei der erste Borstenträger eine Vielzahl von den eine Einheit bildenden Büschel (62, 162, 262, 462, 562) umfasst.

16. Elektrische Zahnbürste nach Anspruch 15, wobei die Vielzahl von den eine Einheit bildenden Büscheln (62, 162, 262, 462, 562) mit gleichem Abstand rings um den ersten Borstenträger angeordnet ist.

## Revendications

1. Brosse à dents électrique (10, 210, 410, 510) comprenant :
a) un corps allongé ayant un manche (12), une tête (30, 230, 430, 530), et un col (20, 220, 420, 520) s'étendant entre ledit manche et la tête, le corps définissant une chambre intérieure ;
b) un moteur (24) au sein de ladite chambre et un arbre (26) fonctionnellement attaché audit moteur ;
c) un premier porteur de poils mobile disposé sur la tête (30, 230, 430, 530), ledit arbre (26) fonctionnellement attaché au premier porteur de poils (60, 260, 460, 560) pour communiquer un mouvement à celui-ci, ledit premier porteur de poils ayant une première touffe composite (62, 162, 262, 462, 562) formée à partir d'une pluralité de touffes de poils étroitement espacées et une pluralité de deuxièmes touffes de poils (64, 264, 464, 564), dans laquelle les deuxièmes touffes ont une hauteur qui est plus grande qu'une hauteur de la première touffe composite, les poils de la première touffe composite ayant des extrémités libres et les poils des deuxièmes touffes ayant des extrémités libres, dans laquelle la pluralité de deuxièmes touffes est disposée adjacente à au moins 60 % d'un périmètre de la touffe composite de façon à former une première région évidée (465, 565);
**caractérisée en ce que**
ladite première touffe composite (62, 162, 262, 462, 562) a une surface continue exempte d'espaces qui est formée par les extrémités libres des poils de ladite pluralité de touffes de poils étroitement espacées, et
la superficie totale des poils de la première touffe composite est supérieure à la superficie totale des poils de n'importe laquelle des deuxièmes touffes (64, 264, 464, 564).

2. Brosse à dents électrique selon la revendication 1, dans laquelle ladite pluralité de deuxièmes touffes (64, 264, 464, 564) est disposée sur des côtés opposés dudit périmètre de ladite première touffe composite (62, 162, 262, 462, 562).

3. Brosse à dents électrique selon la revendication 1 ou 2, dans laquelle la pluralité de deuxièmes touffes (64, 264, 464, 564) est disposée adjacente à au moins 80 % du périmètre de la première touffe composite (62, 162, 262, 462, 562).

4. Brosse à dents électrique selon la revendication 1, dans laquelle la pluralité de deuxièmes touffes encercle complètement le périmètre de la première touffe composite.

5. Brosse à dents électrique selon la revendication 1, dans laquelle ladite première touffe composite a un côté allongé (67) dans une vue en plan de dessus.

6. Brosse à dents électrique selon la revendication 5, dans laquelle le premier porteur de poils (60, 260, 460, 560) est circulaire dans une vue en plan et dans laquelle ledit côté allongé (67) est aligné dans une direction radiale du premier porteur de poils.

7. Brosse à dents électrique selon la revendication 1, dans laquelle ledit premier porteur de poils (60, 260, 460, 560) oscille autour d'un axe généralement perpendiculaire à un axe longitudinal de la tête (30, 230, 430, 530).

8. Brosse à dents électrique selon l'une des revendications précédentes, dans laquelle le premier porteur de poils (60, 260, 460, 560) comprend une pluralité des premières touffes composites (62, 262, 462, 562).

9. Brosse à dents électrique selon l'une des revendications précédentes, dans laquelle ladite première touffe composite a une surface extrême irrégulière.

10. Brosse à dents électrique selon l'une des revendications précédentes, dans laquelle certaines des deuxièmes touffes ont une première hauteur et certaines ont une deuxième hauteur supérieure à la première hauteur.

11. Brosse à dents électrique selon la revendication 10, dans laquelle la hauteur de la première touffe composite (62, 162, 262, 462, 562) est comprise entre 0,5 mm et 2 mm de moins que la hauteur des deuxièmes touffes ayant la première hauteur.

12. Brosse à dents électrique selon la revendication 1, dans laquelle la tête (30, 230, 430, 530) comprend en outre un deuxième porteur de poils mobile fonctionnellement attaché à l'arbre (26), le deuxième porteur de poils mobile ayant une deuxième touffe composite (272, 472, 572) et une pluralité de troisièmes touffes de poils (274, 474, 574), dans laquelle les troisièmes touffes ont une hauteur qui est plus grande qu'une hauteur de la deuxième touffe composite, et dans laquelle la pluralité de troisièmes touffes est disposée adjacente à une partie du périmètre de la deuxième touffe composite de façon à former une deuxième région évidée (279, 479, 579).

13. Brosse à dents électrique selon la revendication 12, dans laquelle les première et deuxième régions évidées forment une région évidée composite s'étendant du premier porteur de poils mobile au deuxième porteur de poils mobile.

14. Brosse à dents électrique (10, 210, 410, 510) comprenant :
a) un corps allongé ayant un manche (12), une tête (30, 230, 430, 530), et un col (20, 220, 420, 520) s'étendant entre le manche et la tête, le corps définissant une chambre intérieure ;
b) un moteur (24) au sein de la chambre et un arbre (26) fonctionnellement attaché au moteur ;
c) un premier porteur de poils mobile disposé sur la tête (30, 230, 430, 530), l'arbre (26) fonctionnellement attaché au premier porteur de poils (60, 260, 460, 560) pour communiquer un mouvement à celui-ci, le premier porteur de poils ayant au moins une première touffe et une pluralité de deuxièmes touffes de poils, dans laquelle les deuxièmes touffes de poils ont une hauteur qui est plus grande que la hauteur de la première touffe, dans laquelle la pluralité de deuxièmes touffes encercle pratiquement la première touffe de façon à former une première région évidée ;
**caractérisée en ce que**
la première touffe est une touffe d'un seul tenant (162) avec une surface continue et une fente (171) dedans adjacente à une extrémité libre de la touffe, la touffe d'un seul tenant (162) ayant une forme allongée dans une vue en plan de dessus, dans laquelle la dimension allongée de la touffe d'un seul tenant (162) est arrangée transversalement à la direction de mouvement du premier porteur de poils (60, 260, 460, 560) et la fente (171) est en forme de V en élévation.

15. Brosse à dents électrique selon la revendication 14, dans laquelle le premier porteur de poils comprend une pluralité des touffes d'un seul tenant (62, 162, 262, 462, 562).

16. Brosse à dents électrique selon la revendication 15, dans laquelle ladite pluralité de touffes d'un seul tenant (62, 162, 262, 462, 562) est espacée de manière égale autour dudit premier porteur de poils.
